# EUROPÄISCHE PATENTANMELDUNG

(11) **EP 1 695 811 A2**
(43) Veröffentlichungstag der Anmeldung: **30.08.2006**
(21) Anmeldenummer: 06112455.8
(22) Anmeldetag: 14.08.2003
(51) Int. Cl.: B29C 47/34, B29C 47/90

(54) **Verfahren zum Abziehen von Extrusionsprodukten, insbesondere Ausrichten des Raupenabzugs auf die Extrusionsachse**

(30) Priorität: 04.09.2002 DE 10240718
(62) Teilanmeldung aus: 03793734.9
(71) Anmelder: Krauss-Maffei Kunststofftechnik GmbH, 80997 München (DE)
(72) Erfinder: Stieglitz, Henning, 81247 München (DE); Laberer, Roman, 85247 Oberroth (DE); Jovers, Stefan, 84478 Waldkraiburg (DE); Weinmann, Andreas, 66440 Blieskastel (DE); Forsch, Karl-Heinz, 66440 Blieskastel-Breitfurt (DE); Baston, Karl-Heinz, 66497 Contwig (DE)
(74) Vertreter: Harrasz, Julia Konstanze

(57) **Zusammenfassung**

Die Erfindung betrifft ein Verfahren zum Abziehen von Extrusionsprodukten, insbesondere von Kunststoffrohren, mittels eines Raupenabzugs (6), der mindestens zwei Raupenketten (10,10') aufweist, wobei die Raupenketten mindestens während des Abziehens symmetrisch zu einer Längsachse des Raupenabzugs anordenbar sind und ihr Abstand von dieser veränderbar ist.

Nachteilig bei bekannten Raupenabzügen ist bislang, dass sie bei einer Querschnittsänderung des extrudierten Produkts manuell neu eingestellt werden müssen.

Gemäß der vorliegenden Erfindung wird eine Änderung des Querschnitts des Extrusionsprodukts gemessen und in Abhängigkeit von dieser Änderung der Abstand der Raupenketten von der Längsachse automatisch so angepasst, dass die Symmetrieachse des Extrusionsprodukts mit der Längsachse des Raupenabzugs übereinstimmt.

## Beschreibung

Die Erfindung betrifft ein Verfahren zum Abziehen von Extrusionsprodukten gemäß dem Oberbegriff des Anspruchs 1 bzw. des Anspruchs 5.

Bei der Produktion von Extrusionsprodukten, zu denen auch Kunststoffrohre zählen, wird der aus einem Extruder austretende, thermoplastische Schmelzestrang in einem Formwerkzeug geformt, danach unter Formzwang abgekühlt und kalibriert. Abzugsvorrichtungen, die in der Extrusionslinie hinter den Kalibrier- und Kühlvorrichtungen angeordnet sind, sorgen dafür, dass der aus dem Extruder austretende Schmelzestrang durch die zwischenliegenden Vorrichtungen gefördert wird. Hierzu wird der zu einem Extrusionsprodukt geformte, kalibrierte Schmelzestrang, der nach dem Abkühlen eine ausreichende Festigkeit aufweist, von dem Abzug erfasst und ruckfrei und mit gleichmäßiger Geschwindigkeit bzw. genau geregeltem Geschwindigkeitsverlauf durch die zwischenliegenden Vorrichtungen gezogen. Je größer die in diesen Vorrichtungen auftretenden Reibkräfte sind, desto größer muss die Abzugskraft der Anlage sein. Gleichzeitig muss die Abzugskraft aber auch auf die Größe bzw. den Querschnitt, den Typ und die Wanddicke des zu fördernden Extrusionsproduktes eingestellt sein.

Zu den gängigsten Abzügen gehören die sogenannten Raupenabzüge, die z.B. in DE 33 05 175 beschrieben werden. Die notwendige Abzugskraft wird hier mit Hilfe von umlaufenden mit Gummistollen besetzten Förderketten, den sogenannten Raupenketten, deren Förderfläche parallel zum zu fördernden Extrusionsprodukt verläuft, in das Rohr eingeleitet. Die Gummistollen sollten möglichst abriebfest sein und dennoch eine gute Haftung der Raupenketten auf der Oberfläche des Extrusionsprodukts haben. Damit eine ungleichmäßige Abnützung der Raupenketten und ein unerwünschtes Verdrehen des Extrusionsprodukts im Abzug vermieden werden kann, müssen die Raupenketten möglichst symmetrisch an dem Extrusionsprodukt angreifen. Für den Fall der Rohrextrusion sind die Raupen also zylindersymmetrisch zu einer Längsachse des Raupenabzugs, die mit der Symmetrieachse des geförderten Rohres übereinstimmen muss, anzubringen, um ein unerwünschtes Verdrehen oder eine ungleichmäßige Belastung des Rohres zu vermeiden.

Bei für die Rohrextrusion verwendeten Raupenabzügen ist es bekannt, abhängig vom Rohrdurchmesser beispielsweise vier Raupenketten vorzusehen, die gegeneinander in X-Stellung um eine Längsachse des Abzugs angeordnet sind. Um die auf das Rohr wirkende Belastung möglichst gering zu halten, muss das Rohr zentrisch in den Abzug einlaufen, d. h. die Symmetrieachse des Rohres muss mit der Längsachse des Abzugs übereinstimmen. Hierzu sind die unteren Raupen über mechanische Verstelleinrichtungen jeweils entlang der Schenkel des X verfahrbar, während die oberen Raupen mit Pneumatikzylindern an das Rohr angepresst werden, deren Wirkrichtung ebenfalls entlang der Schenkel des X liegt. Der in dem Pneumatikzylindern wirkende Druck ist frei einstellbar und muss an die Dimension und die Wandstärke der Rohre angepasst werden. Bei der Produktion von Rohren mit sehr geringen Wandstärken kann es notwendig sein, die Pneumatikzylinder mit einem sogenannten Gegendruck zu beaufschlagen, der gegen die auf die oberen Raupenketten wirkende Schwerkraft arbeitet, eine ausreichende Kraftübertragung von Raupenketten gewährleistet und eine Beschädigung des Extrusionsprodukts verhindert.

Nachteilig an den bekannten Raupenabzügen ist, dass der Raupenabzug bei einen Produktionswechsel mit einer Durchmesseränderung des extrudierten Produktes manuell neu eingestellt werden muss, da ansonsten die Symmetrieachse des Extrudats nicht länger mit der Längsachse der Abzugsvorrichtung übereinstimmt. Hierzu muss die gesamte Extrusionslinie angehalten werden und es kommt zu Produktionsausfällen.

Aufgabe der vorliegenden Erfindung ist es, ein Verfahren und eine Vorrichtung zum Abziehen von Extrusionsprodukten bereit zustellen, die eine Querschnittsänderung des Extrusionsproduktes erkennt und die Lage der Raupenketten automatisch so einstellt, dass die Symmetrieachse des Extrusionsproduktes mit der Längsachse der Abzugsvorrichtung übereinstimmt.

Diese Aufgabe wird durch ein Verfahren gemäß den Merkmalen des Anspruchs 1 und eine Vorrichtung gemäß den Merkmalen des Anspruchs 6 gelöst.

Entsprechend der vorliegenden Erfindung erkennt der Abzug selbsttätig Änderungen im Querschnitt des Extrusionsproduktes die durch einen Produktionswechsel hervorgerufen werden und leitet sofort automatisch Schritte ein, um die Position der Raupenketten so zu korrigieren, dass das Extrusionsprodukt weiterhin zentrisch in die Abzugsvorrichtung einläuft. Diese Durchmesser- bzw. Querschnittanpassung erfolgt während des Betriebs der Anlage, so dass ein separates Abstellen und Anfahren nicht mehr erforderlich ist, und damit auch eine dadurch hervorgerufene unkontrollierte Veränderung der Prozessparameter vermieden wird. Der erfindungsgemäße Abzug ermöglicht es dem Bediener, sehr kurze Umrüstzeiten zu erreichen.

Von der Anlagensteuerung der Extrusionslinie wird dem Abzug lediglich die erwünschte Liniengeschwindigkeit und der anzuwendende Anpress- bzw. Gegendruck, der von den Raupenketten in das Extrusionsprodukt eingebracht werden soll, mitgeteilt. Neben der voll automatischen Anpassung an den veränderten Querschnitt kann die Anpassung auch manuell am Abzug vorgenommen werden, wie es bereits bekannt ist.

In einem besonders bevorzugten Verfahren wird die Änderung des Querschnitts des Extrusionsproduktes anhand der Auslenkung der Raupenketten aus ihrer ursprünglichen Lage gemessen, und auf diese, in Abhängigkeit von der festgestellten absoluten Größe, dadurch reagiert, dass die Abstände der einzelnen Raupenabzüge von der Längsachse der Abzugsvorrichtung automatisch so eingestellt werden, dass das Extrusionsprodukt wieder zentrisch durch diese läuft und alle Krafteinleitungen möglichst symmetrisch erfolgten.

Hierbei ist es möglich, nur die Auslenkung von Raupenketten, die oberhalb einer durch die Horizontale und die Längsachse der Abzugsvorrichtung definierten Ebene angeordnet sind, zu messen und in Anhängigkeit von der dort festgestellten Auslenkung, die unterhalb bzw. in dieser Ebene liegenden Raupenketten derart zu verfahren, dass sich wieder eine symmetrische Anordnung der Raupenketten um das Extrusionsprodukt und die Längsachse ergibt.

In einer besonders bevorzugten Verfahrensweise werden die oben liegenden Raupenketten mit regelbaren, elastischen Mitteln gegen das Extrusionsprodukt gedrückt, wodurch ein gleichmäßiger Druck an allen Raupenketten aufgebaut werden kann. Dieser Anpressdruck wird von der Anlagensteuerung der Extrusionslinie in Abhängigkeit von Material und Dimension vorgegeben.

Gemäß einer weiteren bevorzugten Verfahrensweise wird die gemessene Auslenkung direkt einer Steuerung zugeführt, die hieraus die notwendige Abstandsänderung errechnet und diese veranlasst. Mit Hilfe dieser Steuerung kann auch gleichzeitig der Anpressdruck geregelt werden.

Dieses Verfahren lässt sich bevorzugt mit einem Raupenabzug durchführen, bei dem die mindestens zwei Raupenketten symmetrisch zu einer Längsachse des Raupenabzugs angeordnet werden können und an das Extrusionsprodukt anpressbar sind. Gemäß den bekannten Raupenabzügen sollen die Raupenketten zumindest während des Betriebs, d. h. im Förderzustand mit eingezogenem Extrusionsprodukt symmetrisch zu einer Längsachse des Raupenabzugs angeordnet werden können und eine Anpresskraft auf das Extrusionsprodukt ausüben, die die Kraftübertragung zwischen Raupenketten und Extrusionsprodukt verbessert. Bei sehr kleinen Querschnitten oder dünnen Wandstärken des Extrusionsproduktes kann der Anpressdruck, der bereits durch Schwerkraft der oberhalb des Extrusionsproduktes angeordneten Raupenketten wirkt, auch durch Aufbringen eines Gegendrucks verringert werden, um so eine Beschädigung des Extrusionsproduktes zu vermeiden. Hierbei muss nach wie vor aber eine ausreichende Abzugskraft übertragen werden, um das Extrusionsprodukt durch die zwischen Extruder und Abzug liegenden Vorrichtungen befördern zu können.

Erfindungsgemäß sind Mittel vorgesehen, die es ermöglichen, die durch Querschnittsveränderungen des Extrusionsproduktes hervorgerufenen Auslenkungen von Raupenketten im wesentlichen orthogonal zu der Abzugslängsachse zu messen.

Zum Erzeugen des Anpress- bzw. Gegendrucks auf die Raupenketten können Kolbenzylindereinheiten vorgesehen sein, die mit einem voreingestellten Druck beaufschlagbar sind und deren Kolbenstangen orthogonal zu der Längsachse des Raupenabzugs verfahrbar sind, wobei ihre Wirklinien sich auf der Längsachse schneiden. Besonders bevorzugt ist es, nur die Raupenketten, die oberhalb einer durch die Horizontale und die Längsachse der Abzugsvorrichtung definierten Ebene angeordnet sind, mittels der Kolbenzylindereinheiten elastisch und regelbar zu lagern, während die unterhalb bzw. in dieser Ebene gelegenen Raupenketten mechanisch verfahrbar und ansteuerbar ausgeführt sind.

Es hat sich bewährt, automatisch regelbare Kolbenzylindereinheiten zu verwenden, denen nur der erwünschte und zu haltende Druck vorgegeben werden muss. Besonders bevorzugt werden hierfür Pneumatikzylinder eingesetzt.

Zum mechanischen Ändern des Abstandes zwischen den nicht mit den Kolbenzylindereinheiten gekoppelten Raupenketten und der Längsachse der Einheit sollte mindestens ein Motor vorgesehen sein. Da alle Raupenketten den gleichen Abstand von der fest definierten Längsachse haben sollen, es sich also um eine symmetrische Abstandsänderung handelt, ist es ausreichend, nur einen Motor vorzusehen, der über ein Getriebe mit den in oder unterhalb der horizontalen Ebene liegenden Raupenketten gekoppelt ist.

Zum Messen der Auslenkung der Raupenketten in Reaktion auf eine erfolgte Durchmesser- bzw. Querschnittsänderung des Extrusionsproduktes werden bevorzugt Weggeber verwendet. Es kann aber auch mindestens ein Winkelgeber zum Einsatz kommen. Dieser Winkelgeber wird am Getriebe bzw. an der Welle des Motors angebracht und erlaubt es, die Position der inner- oder unterhalb der horizontalen Ebene liegenden Raupenketten entlang der Verbindungslinien zu der Längsachse exakt zu verfahren.

An den Kolbenzylindereinheiten sind zweckmäßig Weggeber vorgesehen, mit denen die Auslenkung der an diesen elastisch gelagerten Raupenketten durch ein Extrusionsprodukt mit einem veränderten Querschnitt gemessen und einer Steuerung des Raupenabzugs zugeführt werden kann. Die Steuerung errechnet aus der gemessenen Auslenkung die notwendige Abstandsänderung zwischen den in bzw. unterhalb der horizontalen Ebene gelegenen Raupenketten und der Längsachse des Abzugs und verfährt die Raupenketten entsprechend. Die oberhalb der Ebene liegenden Raupenketten werden bei einer Lageänderung der in bzw. unterhalb der Ebene liegenden Raupenketten aufgrund der auf sie wirkenden Anpresskraft ebenfalls entlang der Verbindungslinie zu der Längsachse und orthogonal zu dieser bewegt, so dass alle Raupenketten wieder symmetrisch um diese Längsachse angeordnet sind.

Zusätzlich zur voll automatischen Erkennung einer Querschnittsänderung und der darauf folgenden Einstellung und Nachjustierung der relativen Lage der Raupenketten, sollte es nach wie vor möglich sein, den erfindungsgemäßen Raupenabzug manuell einzustellen, wie dies z. B. bei einer vollständigen Umstellung der Produktionsparameter einer Extrusionslinie notwendig wird.

Anhand der folgenden Zeichnungen soll die Funktionsweise einer erfindungsgemäßen Vorrichtung bzw. eines erfindungsgemäßen Verfahrens zum Abziehen von Rohren noch einmal exemplarisch dargestellt werden. Es zeigen:
- Fig. 1:: Eine Rohrextrusionslinie mit einem erfindungsgemäßen Raupenabzug,
- Fig. 2:: eine schematische Schnittdarstellung eines erfindungsgemäßen Raupenabzugs mit einem Rohr eines ersten Durchmessers,
- Fig. 3:: die Raupenabzugsvorrichtung der Fig. 2 direkt nach einem Dimensionswechsel, und
- Fig. 4:: die Raupenabzugsvorrichtung der Fig. 3 im wiedereingeregelten Zustand.

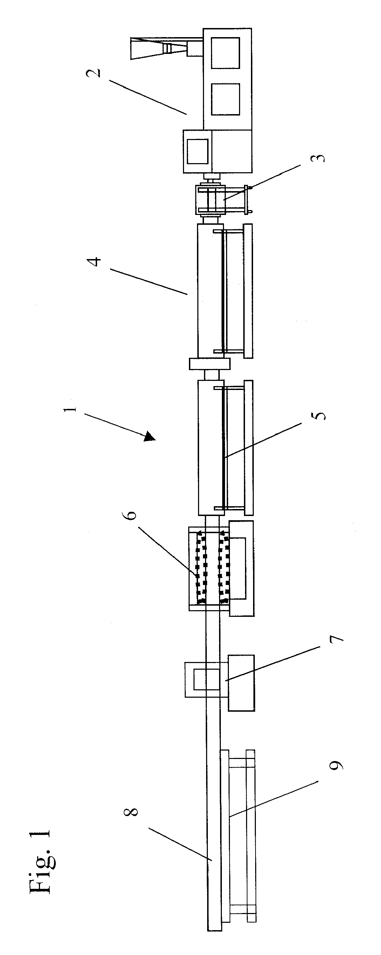

Die Fig. 1 zeigt eine Extrusionslinie 1 zur Herstellung von Kunststoffrohren. Auf einen Extruder 2 folgt ein Rohrwerkzeug 3, hinter dem ein Vakuumtank 4 zum Kalibrieren des extrudierten Schmelzeschlauchs angeordnet ist. Hieran schließt sich eine Kühlvorrichtung 5 an, die die Rohre 8 so weit abkühlen muss, dass sie für die nachfolgend in dem erfindungsgemäßen Raupenabzug 6 auftretenden Beanspruchungen ausreichend formstabil sind. Dieser Raupenabzug 6 bringt in das Rohr 8 eine Abzugskraft ein, die größer sein muss als die zuvor in der Linie auftretenden Reibkräfte, die vor allem im Kalibrator, an Vorrichtungsübergängen und Dichtungen auftreten.

Auf den Abzug 6 folgt eine Trenneinrichtung 7, die die Rohre 8 auf Passlänge schneidet und eine Ablegeeinheit 9.

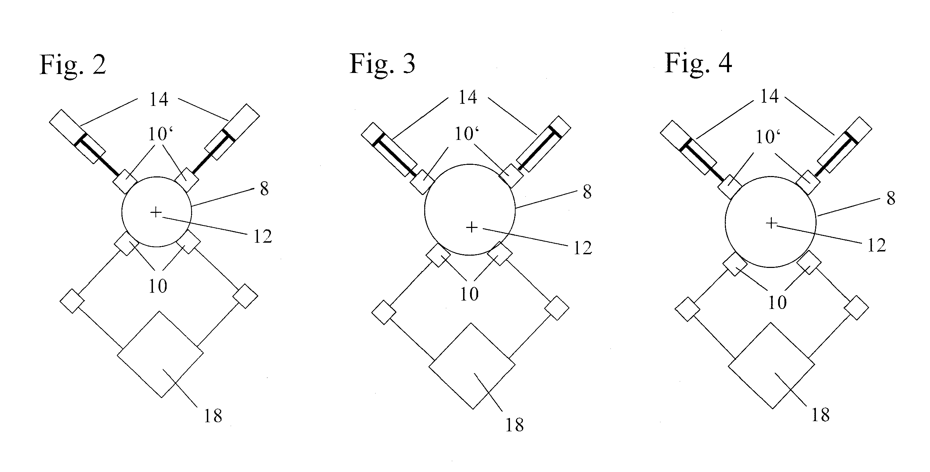

In Fig. 2 ist stark vereinfachend ein schematischer Querschnitt durch einen erfindungsgemäßen Raupenabzug 6 dargestellt, bei dem das extrudierte Rohr 8 von symmetrisch zueinander in X-Stellung angeordneten Raupenketten 10, 10' gefördert wird. Die Längsachse 12 der Abzugsvorrichtung, zu der die Raupenketten 10, 10' symmetrisch angeordnet sind, stimmt mit der Symmetrieachse des Rohres 8 überein. Die Anpresskraft wird von pneumatischen Zylindern 14 eingebracht und bewirkt ein Anpressen aller Raupenketten 10, 10' an die Wand des Rohres 8.

Bei einer Durchmesseränderung des extrudierten Rohres 8 werden die beiden oben gelegenen Raupenketten 10' gegen die von den Druckzylindern 14 aufgebrachte Anpresskraft ausgelenkt, so dass die Anordnung der oberhalb der durch die Horizontale und die Längsachse 12 definierten Ebene liegenden Raupenketten 10' und der unterhalb dieser Ebene liegenden 10 kurzfristig nicht mehr symmetrisch zur Maschinenlängsachse 12 ist. Die Symmetrieachse des Rohres 8 stimmt mehr mit der Längsachse 12 des Raupenabzugs überein. Dieser Zustand ist in Fig. 3 gezeigt. Durch - nicht dargestellte - Weggeber an den Zylindern 14 wird die Auslenkung der Raupenketten 10' festgestellt, gemessen und einer - nicht dargestellten - Steuerung übermittelt, die sofort den Abstand der unteren Raupenketten 10 von der Maschinenlängsachse 12 mit Hilfe eines Winkelgebers am Motor 18 so verändert, dass sich die in Fig. 4 dargestellte symmetrische Anordnung von Raupenketten 10, 10' und Maschinenlängsachse 12 wieder einstellt, die eine optimale Förderung des Rohres 8 bei minimaler Abnutzung der Raupenketten 10,10' gewährleistet.

Der Vorteil der vorliegenden Erfindung ist es, dass bei der Produktion von Extrusionsprodukten in Extrusionslinien auftretenden Querschnittsänderungen von dem Raupenabzug automatisch erkannt werden können und dieser sich selbsttätig auf eine neuerliche, optimale Passung regelt. Dies ermöglicht einen reibungsloseren Betrieb und es werden kostspielige Produktionsausfälle, die durch manuelle Anpassungen verursacht werden, vermieden.

### Bezugszeichenliste

- **1**: Extrusionslinie
- **2**: Extruder
- **3**: Rohrwerkzeug
- **4**: Vakuumtank
- **5**: Kühlvorrichtung
- **6**: Raupenabzug
- **7**: Trenneinrichtung
- **8**: Rohr
- **9**: Ablegeeinheit
- **10**: untere Raupenketten
- **10'**: obere Raupenketten
- **12**: Maschinenlängsachse
- **14**: Pneumatikzylinder
- **18**: Motor

## Patentansprüche

1. Verfahren zum Abziehen von Extrusionsprodukten, insbesondere von Kunststoffrohren, mittels eines Raupenabzugs, der mindestens zwei Raupenketten aufweist, wobei die Raupenketten mindestens während des Abziehens symmetrisch zu einer Längsachse des Raupenabzugs anordenbar sind und ihr Abstand von dieser veränderbar ist,
**dadurch gekennzeichnet, dass** bei einer Durchmesseränderung des Extrusionsprodukts die Änderung des Querschnitts gemessen wird und in Abhängigkeit von dieser Änderung der Abstand der Raupenketten von der Längsachse des Raupenabzugs automatisch so angepasst wird, dass die Symmetrieachse des Extrusionsprodukts mit der Längsachse des Raupenabzugs übereinstimmt.

2. Verfahren nach Anspruch 1, **dadurch gekennzeichnet, dass** bei einer Änderung des Querschnitts des Extrusionsprodukts die oberhalb einer horizontalen Ebene durch die Längsachse des Raupenabzugs angeordneten Raupenketten ausgelenkt werden und diese Auslenkung gemessen wird und die in bzw. unterhalb dieser Ebene liegenden Raupenketten entsprechend der gemessenen Auslenkung derart verfahren werden, dass die Symmetrieachse des Extrusionsprodukts mit der Längsachse des Raupenabzugs übereinstimmt.

3. Verfahren nach Anspruch 2, **dadurch gekennzeichnet, dass** die oberhalb der Ebene angeordneten Raupenketten von regelbaren, elastischen Mitteln gegen das Extrusionsprodukt gedrückt werden.

4. Verfahren nach einem der Ansprüche 1 bis 3, **dadurch gekennzeichnet, dass** die gemessene Auslenkung einer Steuerung zugeführt wird, die die notwendige Abstandsänderung errechnet und die Abstandsänderung veranlasst.

5. Verfahren zum Herstellen von Extrusionsprodukten, insbesondere von Kunststoffrohren, mittels Extrudieren eines Schmelzestrangs aus einem Extruder, Formen des Schmelzestrangs in einem Werkzeug, insbesondere in einem Rohrwerkzeug zu einem Schmelzeschlauch, Abkühlen und Kalibrieren des Extrusionsprodukts und Abziehen desselben mit einem Raupenabzug mit mindestens zwei Raupenketten, sowie Trennen des Extrusionsprodukts in einzelne Stücke, **dadurch gekennzeichnet, dass** bei einer Durchmesseränderung des Extrusionsprodukts der Abstand der Raupenketten von einer Längsachse des Raupenabzugs nach Maßgabe einer gemessenen Durchmesseränderung des Extrusionsprodukts in Abhängigkeit von dieser automatisch so eingestellt wird, dass die Symmetrieachse des Extrusionsprodukts mit der Längsachse des Raupenabzugs übereinstimmt.
